# EUROPÄISCHE PATENTSCHRIFT

(11) **EP 2 403 917 B1**
(45) Veröffentlichungstag und Bekanntmachung des Hinweises auf die Patenterteilung: **01.05.2013**
(21) Anmeldenummer: 10706976.7
(22) Anmeldetag: 19.02.2010
(51) Int. Cl.: C08G 77/20, C08G 61/12, C09J 7/02

(54) **HERSTELLUNG VON TRENNMATERIALIEN FÜR HAFTKLEBEBÄNDER**
PRODUCTION OF SEPARATION MATERIALS FOR ADHESIVE TAPES
FABRICATION DE MATÉRIAUX DE SÉPARATION POUR RUBANS ADHÉSIFS

(30) Priorität: 04.03.2009 DE 102009011166
(43) Veröffentlichungstag der Anmeldung: 11.01.2012
(73) Patentinhaber: TESA SE, 20253 Hamburg (DE)
(72) Erfinder: PRENZEL, Alexander, 20259 Hamburg (DE)
(86) Internationale Anmeldenummer: PCT/EP2010/052107
(87) Internationale Veröffentlichungsnummer: WO 2010/100041

(56) Entgegenhaltungen:
- EP-A2- 1 070 734
- JUDITH STEIN, LARRY N. LEWIS, KEVIN X. LETTKO, CHRIS A. SMPTER: "Cross-Linking of Hexenyl Silicone Polymers via the Olefin Metathesis Reaction" JOURNAL OF INORGANIC AND ORGANOMETALLIC POLYMERS, Bd. 4, Nr. 4, 1994, Seiten 367-376, XP002578175
- GRUBBS R H: "THE DEVELOPMENT OF FUNCTIONAL GROUP TOLERANT ROMP CATALYSTS", JOURNAL OF MACROMOLECULAR SCIENCE , PART A - PURE AND APPLIED CHEMISTRY, MARCEL DEKKER INC, US, vol. A31, no. 11, 1 January 1994 (1994-01-01), pages 1829-1833, XP009060691, ISSN: 1060-1325, DOI: 10.1080/10601329408545884

## Beschreibung

Die Erfindung betrifft ein Verfahren zur Herstellung von homogenen, silikonbasierten Trennmaterialien für Haftklebebänder mit zeitlich stabilen Abzugskräften mittels Hydrosilan und/oder Hydrosiloxan-freier, thermischer Kreuzmetathese sowie die Verwendung Hydrosilan und/oder Hydropolysiloxan-freier Trennmaterialien.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebemassen miteinander in Kontakt kommen, oder um bei einseitig klebenden Klebebändern eine Verklebung der Haftklebemasse auf dem Träger zu verhindern, werden die Klebebänder vor dem Wickeln auf ein Abdeckmaterial (auch als Trennmaterial bezeichnet) aufgebracht, das zusammen mit dem Klebeband aufgewickelt wird. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Abhäsive Beschichtungsmassen werden in großem Umfang zur Herstellung von Linern in der Beschichtung insbesondere von flächigen Materialien wie Papieren oder Folien verwendet, um die Adhäsionsneigung von adhärierenden Produkten gegenüber diesen Oberflächen zu verringern (trennwirksame Funktion).

Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.
Allerdings muss der Liner vom Klebeband abziehbar sein. Durch den Liner selbst oder durch das Abziehen des Liners darf die Klebkraft der Haftklebemasse nicht wesentlich für die spätere Verwendung beeinträchtigt werden.
Gleichzeitig ist die Stabilität der antiadhäsiven Beschichtung (auch als Trennbeschichtung bezeichnet) auf dem Liner, also die Abhäsivität, über lange Zeiträume wichtig, um die Funktion dieser Beschichtung sowie die Eigenschaften der mit dem Liner eingedeckten Haftklebemasse zu gewährleisten.

Als Trennbeschichtung werden häufig vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen, wie Dibutylzinndiacetat, in der Masse zugegen.

Silikonbasierende Trennbeschichtungen auf additionsvernetzender Basis lassen sich durch Hydrosilylierung härten. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator.
Als Katalysatoren für additionsvernetzende Silikonsysteme (Hydrosilylierungskatalysatoren) haben sich beispielsweise Platin oder Platinverbindungen, wie zum Beispiel der Karstedt-Katalysator [eine Pt(0)-Komplexverbindung] durchgesetzt.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis und/oder UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der DE 600 01 779 T2 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Auch photopolymerisierbare Organopolysiloxanmassen können verwendet werden Genannt seien beispielsweise Massen, die durch die Reaktion zwischen Organopolysiloxanen, die mit Acrylat- und/oder Methacrylatgruppen substituierte, direkt an die Siliciumatome gebundene Kohlenwasserstoffreste aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.
Beim Einsatz der zum Beispiel in der DE 33 16 166 C1 beschriebenen Organopolysiloxanmassen, die mit Epoxygruppen substituierte, direkt an die Siliciumatomen gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, weiche zum Beispiel Propenyloxysiloxanendgruppen aufweisen.

Aus "Cross-Linking of Hexenyl Silicone Polymers via the Olefin Metathesis Reaction" (J. Stein, L. N. Lewis, K. X. Lettko. C. A. Smpter in Journal of Inorganic and Organometallic Polymers, Bd. 4, Nr. 4, 1994, Seiten 367 - 376) ist darüber hinaus eine Vernetzung von hexenylsubstituierten Organpolysiloxanen in einer Metathesereaktion als Alternative zur Vernetzung mittels einer Hydrosilylierungsreaktion bekannt.

Von den genannten Silikonen haben die additionsvernetzenden (hydrosilylierungshärtenden) Silikone die größte ökonomische Bedeutung. Eine ungewünschte Eigenschaft dieser Systeme ist allerdings ihre Empfindlichkeit gegenüber Katalysatorgiften, wie zum Beispiel Schwermetall-, Schwefel- und Stickstoffverbindungen. Allgemein gilt, dass Elektronendonatoren als Platingifte angesehen werden können. Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet.
Daher wird bei der Herstellung von antiadhäsiven Silikonbeschichtungen die Anwesenheit von Kontaktgiften, insbesondere von Platingiften, streng vermieden. Weiterhin sind Hydrosilane und Organopolysiloxane mit direkt an Siliciumatomen gebundenen Wasserstoffatomen teilweise sehr reaktiv und vor allen Dingen feuchtigkeitsempfindlich, wodurch sich Probleme mit der Topfzeit der Formulierung der noch nicht gehärteten Silikonmasse und/oder der Lagerung der Chemikalien ergeben können.

Die praktische Anwendung der genannten antiadhäsiven Silikonbeschichtungen weist allerdings eine Reihe von Nachteilen auf.

So wird das Niveau der Abzugskraft einer Haftklebemasse von einem Silikon-Release-Liner üblicherweise durch Silikon-MQ-Harze (üblicherweise Silikon-Methylsilikon-Kautschuk-Harze) eingestellt. Je nach Anforderung an das Produkt wird ein unterschiedliches Niveau für die Abzugskräfte verlangt. Dies macht es erforderlich, mehrere Release-Liner mit verschiedenen MQ-Harz-Gehalten zu verwenden und damit auch zu bevorraten.
Weiterhin können Releaseliner häufig nicht sofort nach der Produktion eingesetzt werden, weil die Eigenschaften des Liners noch kein konstantes Niveau erreicht haben. Dies zeigt sich insbesondere an Messungen der Trennkräfte. Diese sinken in der Regel in den ersten Tagen und Wochen nach der Produktion, bis sie ein konstantes Niveau erreichen. Der Effekt wird "post-curing" oder Nachvernetzung genannt. Die Zeit zwischen Produktion des Release-Liners und Beschichtung mit Haftklebemasse wird dem entsprechend post-curing-Zeit, Nachvernetzungszeit oder auch Reifezeit genannt. Je nach Anforderung an den Releaseliner und auf dem Releaseliner verwendeter Haftklebemasse kann die Reifezeit mehrere Wochen betragen. Wegen der benötigten Reifezeit müssen die produzierten Releaseliner gelagert werden, wodurch Lagerkosten entstehen.
Eine weitere Problematik ergibt sich daraus, dass bei Laminaten von Release-Linern und Haftklebemassen manchmal ein Anstieg der Abzugskräfte bei der Lagerung beobachtet. Dem Fachmann ist dieser Effekt als "Adhesive Lock-up" oder im speziellen für Haftklebemassen auf Acrylatbasis als "Acrylic Lock-up" bekannt. Dieser Effekt führt unter Umständen dazu, dass sich der Release-Liner nur schwer oder gar nicht mehr von der Haftklebemasse abziehen lässt und das Produkt somit unbrauchbar wird, und kann teilweise mit einer chemischen Reaktion von Hydrosilylgruppen mit dem Polyacrylat oder auch der Doppelbindung in Natur- und Synthesekautschuk erklärt werden.

Aufgabe der Erfindung ist, die Nachteile des Standes der Technik zu vermeiden oder zumindest zu verringern. Insbesondere ist es wünschenswert,
- den Anteil sehr reaktiver Verbindungen wie beispielsweise Hydrosilane oder Organopolysiloxane mit an Siliciumatomen gebundenen Wasserstoffatomen zu verringern oder den Einsatz solcher Verbindungen ganz zu vermeiden, um genügend große Topfzeiten bei der Herstellung der Silikonbeschichtung zu gewährleisten,
- verschiedene Abzugskräfte, die sich zwischen einer acrylatbasierten Haftklebemasse, die sich auf einem mit einer Silikonbeschichtung ausgerüsteten Liner befindet, und diesem Liner einstellen zu können, ohne dass die Klebkraft der Haftklebemasse beeinflusst wird,
- die benötigte Reifezeit vor dem Einsatz des Release-Liners zu verkürzen, und/oder
- den Acrylic Lock-up zu verhindern.

Gelöst wird die Aufgabe durch eine Silikonbeschichtung mit trennwirksamen Eigenschaften ("Trennschicht"), also der Befähigung, die Adhäsionsneigung von adhärierenden Produkten (Haftklebemassen) gegenüber den unbehandelten Oberflächen zu verringern, die durch Metathesevernetzung einer Formulierung unfassend zumindest ein alkeglsugtituiertes Organopolysiloxan erhältlich ist, wie in Anspruch 1 offenbart.

Das Verfahren gemäß Anspruch 1 zeichnet sich insbesondere dadurch aus, dass auf den Einsatz von Hydrosilanen und/oder Hydrosiloxanen als Vernetzersubstanzen verzichtet werden kann. In vorteilhafter weise wird das Verfahren demnach in Abwesenheit dieser Verbindungen durchgeführt.

Es kann gezeigt werden, dass die mit dem erfindungsgemäßen Verfahren erhaltenen Trennschichten eine deutlich verringerte Tendenz zum Adhesive Lock-up und insbesondere zum Acrylic Lock-up aufweisen, verglichen mit solchen Trennschichten vergleichbarer Silikon-Zusammensetzungen, die mittels Hydrosilanen und/oder Hydrosiloxanen vernetzt wurden.

Dem entsprechend betrifft der Hauptanspruch ein Verfahren zur Herstellung einer trennwirksamen Schicht eines Releaseliners (eines Abdeckmaterials; auch als Trennpapier, Trennfolie), basierend auf einer Formulierung beinhaltend zumindest ein alkenylsubstituiertes Organopolysiloxan, wobei die Formulierung in Lösung vorliegt der Lösung ein Metathesekatalysator zugesetzt wird, der auf einem Metallcarboncomplex von Ruthenium oder Molybdan basiert, die mit dem Katalysator versehene Lösung auf ein Trägermaterial beschichtet wird und auf dem Trägermaterial eine Metathesereaktion des alkenylsubstituierten Organopolysiloxans zur Vernetzung der Formulierung stattfindet, wobei der Katalysator in einer Menge von 0,01 bis 10 Gewichtsprozent, bezogen auf die Formulierung, vorliegt.

Die Vernetzung findet insbesondere zwischen jeweils zwei Alkenylsubstituenten der Organopolysiloxan-Moteküle durch eine Kreuzmetathesereaktion statt:

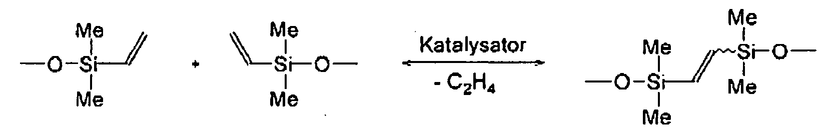

Dabei findet also eine Vernetzungsreaktion zwischen den Alkenylsubstituenten der Organopolysiloxankomponente der Formulierung statt. In einer Ausführungsvariante der Erfindung beschränkt sich die Formulierung auf diese Komponente.
Gerade im Hinblick auf den Reaktionsmechanismus, aus dem ersichtlich wird, dass die Triebkraft bei der Verknüpfung der beiden Alkenylsubstituenten die Entstehung und das Entweichen gasförmigen Ethens ist, ist es überraschend und dem Fachmann nicht offensichtlich, dass sich das auf dieser Reaktion basierende Verfahren zur Herstellung von Silikonbeschichtungen eignet, da angenommen werden konnte, dass die Gasbildung zu einer Blasenbildung und somit zu einer inhomogenen Beschichtung führen würde.
Die oben verwendete Bezeichnung "Alkenyl" bezieht sich auf eine lineare, verzweigte oder cyklische Kohlenwasserstoffgruppe aufweisend 2 bis 20 Kohlenstoffatomen, die mindestens eine Doppelbindung enthält, wie zum Beispiel Ethenyl, n-Propenyl, Isopropenyl, n-Butenyl, Isobutenyl, Octenyl, Decenyl, Tetradecenyl, Hexadecenyl, Eicosenyl, Tetracosenyl. Bevorzugte Alkenyle weisen 2 bis 12 Kohlenstoffatome auf. Die Bezeichnung "substituiertes Alkenyl" bezeichnet ein Alkenyl, welches mit einem oder mehreren Substituenten versehen ist. Falls nicht weiter beschrieben, beinhaltet die Bezeichnung Alkenyl lineare, verzweigte, cyklische, unsubstituierte und/oder substituierte Alkenyle.

In einer sehr vorteilhaften Ausführung der Erfindung findet die Metathesereaktion während der Trocknung des aufgebrachten Formulierung statt, also während des Entzuges des Lösungsmittels aus der aufgebrachten schicht der Formulierung. Die für die Metathese benötigte thermische Energie wird dann vorteilhaft bei der Trocknung der Formulierung insbesondere durch die Wärme zugeführt, die auch zur Trocknung selbst verwandt wird.

In einer bevorzugten Vorgehensweise umfasst die Formulierung weiterhin zumindest ein Silikon-MQ-Harz. Das Silikon-MQ-Harz ist aus R₃SiO_{1/2}-Einheiten ("M-Einheiten") und SiO_{4/2}-Einheiten ("Q-Einheiten") aufgebaut, wobei die Substituenten R der M-Einheiten unabhängig voneinander Alkylgruppen, Alkenylgruppen und/oder Alkylsilylgruppen, insbesondere Methylgruppen sind.

Das Silikon-MQ-Harz kann von der Metathesereaktion unberührt bleiben. Mit geeigneten Substituenten R des Silikon-MQ-Harzes kann dieses aber auch an der Metathesereaktion teilnehmen und somit in das Netzwerk mit eingebaut werden. Entsprechend können bei der Anwesenheit mehrerer Silikon-MQ-Harze keines, eine oder alle der Harze bei der Metathesereaktion mit dem alkenylsubstituierten Organopolysiloxan und/oder mit einander reagieren.

Geeignete Katalysatoren für die Vernetzungsreaktion umfassen Metallcarbenkomplexe basierend auf Molybdän oder insbesondere Ruthenium, die als Metallcarben eingesetzt werden. Weiterhin können auch Kombinationen mehrerer Katalysatoren eingesetzt werden.
Besonders bevorzugt werden Olefinmetathese-Katalysatoren gewählt, die für häufige Kreuzmetathesen zwischen Alkenylverbindungen, bevorzugt terminale Alkenylverbindungen und besonders bevorzugt für monosubstituierte, terminale Alkenylverbindungen wirksam sind (vgl. hierzu: Grubbs, Sandford, Love, J. Am. Chem. Soc. 2001, 123, 6543; S. Beligny, S. Blechert, N-Heterocyclic Carbene-Ruthenium Complexes in Olefin Metathesis Reactions, in "N-Heterocyclic Carbenes in Synthesis" (Ed. S. P. Nolan), Wiley-VCH, Weinheim 2006, 1-25). Als Beispiele für Olefinmetathese-Katalysatoren, aber ohne eine Einschränkung vornehmen zu wollen, seien als vorteilhaft im Sinne dieser Erfindung die folgenden Metallcarbenkomplexe genannt: Grubbs-Katalysator 1. Generation (Bis(tricyclohexylphosphin)dichlorruthenium(II)benzyliden, [(PCy₃)₂Cl₂]Ru=CHPh), Grubbs-Katalysator 2. Generation ([1,3-Bis(2,4,6-trimethylphenyl)-2-imidazolidinyliden]dichloro(tricyclohexylphosphin)ruthenium(II)benzylidene), Hoveyda-Grubbs-Katalysator 1. Generation (Dichloro(o-isopropoxyphenylmethylen)(tricyclohexylphosphine)ruthenium(II)), Hoveyda-Grubbs-Katalysator 2. Generation (1,3-Bis-(2,4,6-trimethylphenyl)-2-imidazolidinyliden)-dichloro(o-isopropoxyphenylmethylen)ruthenium(II)), [1,3-Bis(2,4,6-trimethylphenyl)-2-imidazolidinyliden]dichloro(3-methyl-2-butenyliden)(tricyclohexylphosphin)ruthenium(II), [1,3-Bis(2,4,6-trimethylphenyl)-2-imidazolidinyliden]dichloro-bis(3-bromopyridin)-ruthenium(II)benzyliden, 1,3-Bis(2,4,6-trimethylphenyl)-2-imidazolidinyliden]dichloro[3-(2-pyridinyl)propyliden]ruthenium(II), [1,3-Bis(2-methylphenyl)-2-imidazolidinyliden]dichloro-(2-isopropoxyphenylmethylen)ruthenium(II), [1,3-Bis(2-methylphenyl)-2-imidazolidinyliden]dichloro(phenylmethylen)(tricyclohexylphosphin)ruthenium(II), Dichloro(3-methyl-2-butenyliden)bis(tricyclohexylphosphin)ruthenium(II), Dichloro(3-methyl-2-butenyliden)bis(tricyclopentylphosphin)ruthenium(II) und 2,6-Diisopropylphenylimido-neophyliden[*rac*-BIPHEN]molybdän(VI).

Der Release-Liner ist erfindungsgemäß mit einer Silikonbeschichtung ausgerüstet. Vorzugsweise handelt es sich bei der auf dem Liner vorgesehene Silikonbeschichtung um Silikon, welches einer additionsvernetzenden Silikonformulierung gleicht, wobei die reaktiven Vernetzer (H-Si-Verbindungen) entfallen.

Im Folgenden werden besonders vorteilhafte Silikone näher erläutert.

Die erfindungsgemäß eingesetzten silikonbasierenden Trennbeschichtungen sind solche, die sich durch Kreuzmetathese - insbesondere thermisch - härten lassen. Diese Trennsysteme umfassen erfindungsgemäß die folgenden Bestandteile: ein alkenyliertes Polydiorganosiloxan (insbesondere lineare Polymere mit endständigen Alkenylgruppen) sowie einen Olefinmetathesekatalysator, insbesondere der vorstehend bezeichneten Art.

Erfindungsgemäß vorteilhafte, thermisch härtende Trennbeschichtungen auf Basis von Kreuzmetathese-vernetzenden Silikonen sind Mehrkomponentensysteme, welche typischerweise aus folgenden Komponenten bestehen:
a) Einem linearen oder verzweigten Polydimethylsiloxan, welches aus ca. 80 bis 200 Dimethylsiloxan-Einheiten besteht und an den Kettenenden mit Vinyldimethylsiloxy-Einheiten abgestoppt ist, oder einem linearen Polydimethylsiloxan, welches aus ca. 80 bis 200 Dimethylsiloxan-Einheiten und ca. 1 bis 10 Methylvinylsiloxan-Einheiten besteht sowie an den Kettenenden mit Vinyldimethylsiloxy-Einheiten abgestoppt ist. Typische Vertreter sind zum Beispiel lösungsmittelfreie Silikonöle, die normalerweise als additionsvernetzende Systeme verwendet werden, wie DEHESIVE® 920, 912 oder 610, alle kommerziell erhältlich bei Wacker-Chemie GmbH, wie SYL-OFF® SL 9104, kommerziell erhältlich bei Dow Corning GmbH, oder wie POLYMER VS 100, 1.000, 10.000, 100.000, kommerziell erhältlich bei Hanse Chemie AG.
b) Einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH, oder SYL-OFF® SL 9154, kommerziell erhältlich bei Dow Corning GmbH.
c) Einem Olefinmetathesekatalysator wie zum Beispiel einem Grubbs- oder Hoveyda-Grubbs-Katalysator der zweiten Generation welcher bei Sigma-Aldrich kommerziell erhältlich ist.

Des Weiteren sind Massen geeignet und im Sinne der Erfindung, wie sie zum Beispiel in der bereits oben erwähnten DE 600 01 779 T2, dort insbesondere Anspruch 12 sowie in den Abschnitten [0036] bis [0050], beschrieben werden. Diese Trennsysteme sind solche, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators. Durch die Kombination eines Hydrosilylierungskatalysators mit dem erfindungsgemäßen Olefinmetathesekatalysators ist, bei geeigneter Abstufung der Reaktivitäten der Katalysatoren, ein dual cure-System (Doppelvernetzungssystem) zugänglich, das bedeutet, dass zunächst bei einer niedrigen Temperatur eine Vernetzungsreaktion initiiert wird und anschließend bei einer höheren Temperatur noch ein zweiter Vernetzungsschritt (erwünschtes post-curing) nachgeschaltet werden kann.

Als Beispiele für Haftklebemassen, aber ohne eine Einschränkung vornehmen zu wollen, seien als vorteilhaft im Sinne dieser Erfindung die folgenden genannt, welche aus Lösung, wässriger Dispersion, aus der Schmelze oder als Reaktivsystem beschichtet werden können: Acrylathaft-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerbläcke) sowie weitere, dem Fachmann geläufige Haftklebemassen, für die silikonhaltige Trennbeschichtungen verwendet werden können. Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschreiben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist.

Gegenstand der Erfindung ist weiterhin die Verwendung von entsprechenden Trennschichten in Form eines Release-Liners, welche in direktem Kontakt zur Haftklebemasse eingesetzt werden. Durch den Einsatz der erfindungsgemäßen bzw. erfindungsgemäß hergestellten trennwirksamen Schichten können die Abzugskräfte, mit denen der Liner von der Haftklebemasse abgezogen wird, reguliert werden.
Der Ausdruck "Regulierung der Abzugskräfte" umfasst dabei die Einstellung der Abzugskräfte auf ein bestimmtes Niveau, die Reduzierung der Reifezeit, also die Zeit zwischen der Herstellung des Release-Liners und der Kontaktierung mit der Haftklebemassenschicht (also die zeitliche Einstellung der Abzugskräfte auf einen für die Anwendung geeigneten Wert) und auch die Verhinderung von Reaktionen zwischen der Haftklebemasse und dem Silikon (also die Verhinderung der diesbezüglichen Alterung des Systems und somit die zeitliche Veränderung der Abzugskräfte). Dementsprechend schließt die bezeichnete Verwendung alle Vorgänge ein, die zumindest eines, besser alle der genannten Effekte bewirken.

Vorzugsweise werden als Metallcarbene für die Metathesereaktion Olefinmetathesekatalysatoren eingesetzt, die hinsichtlich der Kreuzmetathese von Alkenylen, insbesondere von terminalen Alkenylen und besonders bevorzugt von monosubstituierten Alkenylen eine erhöhte Reaktivität aufweisen. Erfindungsgemäß werden Olefinmetathesekatalysatoren auf Ruthenium- (Grubbs- und Hoveyda-Grubbs-Katalysatoren) und Molybdänbasis (Schrock-Katalysatoren) eingesetzt, da diese eine hohe Turn-over-Zahl haben (Reaktivität und Anzahl der Katalysezyklen) sowie im Falle der Grubbs- und Hoveyda-Grubbs-Systeme eine erhöhte Toleranz gegenüber Spuren von Wasser und Sauerstoff sowie Heteroatomen im Polymer aufweisen. Die Katalysatoren zur Vernetzung der silikonbasierten Trennschicht werden in einer Menge von 0,01 bis zu 10 Gew.-%, besonders bevorzugt von 0,01 bis 5 Gew.-%, ganz besonders bevorzugt 0,01 bis 2 Gew.-% eingesetzt.

Über die Menge des zugesetzten Katalysators lassen sich die Abzugskräfte der Klebeschicht vom Release-Liner direkt über den Vernetzungsgrad einstellen. Überraschenderweise wurde gefunden, dass die Reifezeit sowie die zeitliche Beständigkeit der Abzugskräfte wiederum unabhängig von der Katalysatorkonzentration sind und dass sofort nach der Beschichtung und Vernetzung der Silikonmasse nahezu zeitlich konstante Abzugskräfte erreicht werden und kein Adhesive Lock-up auftrat.
Für eine Einstellung im Bereich niedriger bis mittlerer Abzugskräfte ist es vorteilhaft, die Menge an Katalysator in der Silikonmasse zu erhöhen, etwa auf einen Bereich von 0,1 bis 5 Gew.-%, insbesondere von 0,1 bis 2 Gew.-%.

Die Silikone werden - insbesondere in Lösung - auf dem Träger aufgebracht, wobei alle dem Fachmann geläufigen Beschichtungsverfahren verwendet werden können, dort erforderlichenfalls getrocknet (das Lösemittel abgezogen) und bilden anschließend eine geschlossene Silikonbeschichtung.

Als Trägermaterial des Liners können insbesondere Papiere oder Folien eingesetzt werden. Als Folien werden dabei bevorzugt Polyolefinfolien (Polypropylen- und Polyethylenfolien) oder Polyesterfolien eingesetzt.

Schließlich betrifft die Erfindung die Verwendung der erfindungsgemäßen Trennbeschichtung auf Silikonbasis in einem Klebeband.

Im Folgenden wird die Erfindung anhand von Beispielen näher erläutert, ohne dass diese in irgendeiner Form einschränkend wirken sollen.

### Beispiele

### Herstellung der Releaseliner

### Vergleichsbeispiel

Eine vernetzbare Silikonmasse bestehend aus 70 Teilen Dow Corning SYL-OFF® SL 9104, 30 Teilen Dow Corning SYL-OFF® SL 9154, 8,9 Teile Dow Corning SYL-OFF® SL 7689 und 1,6 Teile Dow Corning SYL-OFF® 4000 wurde auf einer PET-Folie (Lumirror 60.01, 75µm, Toray) mit Hilfe eines Rakeis Nr. 1 aus 30%iger Lösung in Benzin aufgetragen. Das Silikon wurde bei 150 °C für 30 Sekunden vernetzt. Der Silikonauftrag wurde auf 1,3 g/m² eingestellt.

### Beisplel RL1

Eine vernetzbare Silikonmasse bestehend aus 70 Teilen Dow Corning SYL-OFF® SL 9104, 30 Teilen Dow Corning SYL-OFF® SL 9154 und 1,6 Teile Hoveyda-Grubbs-Katalysator 2. Generation ((1,3-Bis-(2,4,6-trimethylphenyl)-2-imidazolidinyliden)dichloro-(o-isopropoxyphenylmethylen)ruthenium(II), CAS Nr.: 30122440-8) von Sigma-Aldrich wurde auf einer PET-Folie (Lumirror 60.01, 75µm, Toray) mit Hilfe eines Rakels Nr. 1 aus 30%iger Lösung in Toluol aufgetragen. Das Silikon wurde bei 150 °C für 30 Sekunden vernetzt. Der Silikonauftrag wurde auf 1,3 g/m² eingestellt.

### Beispiel RL2 (Vergleichsbeispiel)

Eine vernetzbare Silikonmasse bestehend aus 70 Teilen Dow Corning SYL-OFF® SL 9104, 30 Teilen Dow Corning SYL-OFF® SL 9154 und 0,6 Teile Hoveyda-Grubbs-Katalysator 2. Generation ((1,3-Bis-(2,4,6-trimethylphenyl)-2-imidazolidinyliden)dichloro-(o-isoproproxyphenylmethylen)ruthenium(II), CAS Nr.: 301224-40-8) von Sigma-Aldrich wurde auf einer PET-Folie (Lumirror 60.01, 75µm, Toray) mit Hilfe eines Rakels Nr. 1 aus 30%iger Lösung in Toluol aufgetragen. Das Silikon wurde bei 150 °C für 30 Sekunden vernetzt Der Silikonauftrag wurde auf 1,3 g/m² eingestellt.

### Beispiel RL3 (Vergleichsbeispiel)

Eine vernetzbare Silikonmasse bestehend aus 70 Teilen Dow Corning SYL-OFF® SL 9104, 30 Teilen Dow Corning SYL-OFF® SL 9154 und 0,1 Teile Hoveyda-Grubbs-Katalysator 2. Generation ((1,3-Bis-(2,4,6-trimethylphenyl)-2-imidazolidinyliden)dichloro-(o-isoproproxyphenylmethylen)ruthenium(II), CAS Nr.: 301224-40-8) von Sigma-Aldrich wurde auf einer PET-Folie (Lumirror 60.01, 75µm, Toray) mit Hilfe eines Rakels Nr. 1 aus 30%iger Lösung in Toluol aufgetragen. Das Silikon wurde bei 150 °C für 30 Sekunden vernetzt. Der Silikonauftrag wurde auf 1,3 g/m² eingestellt.

### Herstellung der Acrylathaftklebemasse

In einer radikalischen Polymerisation in einem konventionellen 200 L-Reaktor wurden 0,7 kg Acrylsäure, 33,95 kg 2-Ethylhexylacrylat, 33,95 kg Butylacrylat, 1,4 kg Gylcidylmethacrylat und 23,35 kg Siedegrenzbenzin 60/95 sowie 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67^{™} (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67^{™} (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,5 h Reaktionszeit wurden 10,50 kg Siedegrenzbenzin 60/95 als Verdünnung hinzugegeben. Eine weitere Verdünnung erfolgte nach 7,5 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.
Anschließend wurde das Polymer mit 37,5 Gew.-% Sylvares TP 95 (Terpen-Phenol-Harz mit einer Erweichungstemperatur von 95 °C) und 0,3 Gew.-% ZnCl₂ abgemischt (Gew.-% jeweils bezogen auf das Polymer).

### Präparation 1 der Prüfstreifen Beispiel RL1-3 und Vergleichsbeispiel mittels Aufrakeln (Beispiele B1-4)

Die Haftklebemasse wurde, sofern nicht anders beschrieben, sofort auf den jeweiligen Release-Liner mit Hilfe eines Streichbalkens aufgetragen. Die Haftklebemasse wurde nach dem Abdampfen des größten Teils des Lösungsmittels für 15 Minuten bei 120 °C in einem Umluftofen getrocknet. Es wurde ein Masseauftrag von 50 g/m² gewählt. Nach dem Abkühlen der Proben wurde eine 23 µm dicke PET-Folie [Polibond D23H, Polifibra Folien GmbH] auf die Haftklebemasse kaschiert. Die jeweiligen Verbünde aus Releaseliner, Haftklebemasse und 23µm PET-Folie wurden in 2 cm breite Streifen geschnitten.

### Präparation 2 der Prüfstreifen Beispiel RL1-3 und Vergleichsbeispiel mittels Kaschierung (Beispiele B5-8)

Die Haftklebemasse wurde auf einer 23 µm dicke PET-Folie [Polibond D23H, Polifibra Folien GmbH] mit Hilfe eines Streichbalkens aufgetragen. Die Haftklebemasse wurde nach dem Abdampfen des größten Teils des Lösungsmittels für 15 Minuten bei 120 °C in einem Umluftofen getrocknet. Es wurde ein Masseauftrag von 50 g/m² gewählt. Nach dem Akklimatisieren der Proben auf 23±1 °C und 50±5 % relative Luftfeuchte wurde der jeweilige Release-Liner auf die Haftklebemasse kaschiert. Die jeweiligen Verbünde aus Release-Liner, Haftklebemasse und 23µm PET-Folie wurden schnellstmöglich in 2 cm breite Streifen geschnitten.

### Beschreibung der Messung der Proben B1-B4

Die Abzugskraft der PET-Folie und Haftklebemasse vom Release-Liner wurde in einem Winkel von 180° bei einer Abzugsgeschwindigkeit von 0,3 m/min gemessen, wobei die Messung bei 23±1 °C und einer relativen Luftfeuchte von 50±5 % durchgeführt wurde. Die Messung der Abzugskraft wurde ca. 24 Stunden nach Beschichtung des Trennpapiers mit der Haftklebemasse gemessen.

### Beschreibung der Messung der Proben B5-B8

Die geschnittenen Streifen wurden für eine Minute bei einem Druck von 2 N/cm² gelagert. Die Abzugskraft der PET-Folie und Haftklebemasse vom Release-Liner wurde in einem Winkel von 180° bei einer Abzugsgeschwindigkeit von 0,3 m/min gemessen, wobei die Messung bei 23±1 °C und einer relativen Luftfeuchte von 50±5 % durchgeführt wurde. Die Zeit zwischen Laminierung des Liners und Messung der Abzugskraft betrug dabei stets weniger als fünf Minuten.

Außerdem wurde noch eine Messung der Abzugskraft durchgeführt, nachdem die Verbünde aus Release-Liner, Haftklebemasse und PET-Folie für 30 Tage bei 70°C gelagert haben.

Aus der nachfolgenden Tabelle 1 ist zu entnehmen, die Zugabe des Olefinmetathesekatalysators die Abzugskraft der PET-Folie und Haftklebemasse vom Releaseliner reduziert. Der Effekt ist umso stärker, je höher die Konzentration des Katalysators ist. Die Abzugskräfte des Vergleichsbeispiels B1 sind am höchsten. Bei einer sehr niedrigen Katalysatorkonzentration und somit einem geringen Vernetzungsgrad nähert sich die Abzugskraft schon sehr nah an den Wert des Vergleichsbeispiel B1 an.

**Tabelle 1**

| **Experiment** | **Abzugskraft [cN/cm]** |
|---|---|
| Vergleichsbeispiel B1 | 68 |
| Beispiel B2 | 26 |
| Vergleichsbeispiel B3 | 40 |
| Vergleichsbeispiel B4 | 67 |

Aus der nachfolgenden Tabelle 2 ist zu entnehmen, dass die Abzugskraft der Haftklebemasse auf dem additionsvernetzten Release-Liner bei Lagerung deutlich ansteigt. Die mittels Metathese vernetzten Silikonmassen zeigen wiederum so gut wie keinen post-curing-Effekt und die Abzugskräfte bleiben nahezu konstant.

**Tabelle 2**

| **Experiment** | **Abzugskraft sofort [cN/cm]** | **Abzugskraft nach Lagerung bei 70°C für 30 Tage [cN/cm]** |
|---|---|---|
| Vergleichsbeispiel B5 | 7 | 89 |
| Beispiel B6 | 3 | 4 |
| Vergleichsbeispiel B7 | 5 | 7 |
| Vergleichsbeispiel B8 | 7 | 10 |

Die untersuchte Vernetzung und das Verfahren zur Herstellung einer silikonbasierenden, Hydrosilan- und/oder Hydropolysiloxanfreien Trennbeschichtung mittels Kreuzmetathese war geeignet, die Aufgabe der Erfindung hervorragend zu erfüllen, ohne einen wesentlichen Einfluss auf die Eignung der Haftklebemassen für ihren jeweiligen Verwendungszweck zu zeigen. Als besonders hervorragend geeignet haben sich Olefinmetathesekatalysatoren herausgestellt, insbesondere die Grubbs- und Hoveyda-Grubbs-Katalysatorsysteme. Die mittels dieses Verfahrens und der neuen Vernetzungsmethode hergestellten Trennbeschichtungen zeigten kaum Alterung sowie post-curing und auch kein Acrylic Lock-up, wodurch der Einsatz solcher Trennbeschichtungen gegenüber dem Stand der Technik deutlich von Vorteil ist.

## Patentansprüche

1. Verfahren zur Herstellung einer trennwirksamen Schicht eines Releaseliners, basierend auf einer Formulierung beinhaltend zumindest ein alkenylsubstituiertes Organopolysiloxan, **dadurch gekennzeichnet, dass**
die Formulierung in Lösung vorliegt, der Lösung ein Metathesekatalysator basierend auf Ruthenium oder Molybdän zugesetzt wird, die mit dem Katalysator versehene Lösung auf ein Trägermaterial beschichtet wird und auf dem Trägermaterial eine Metathesereaktion des alkenylsubstituierten Organopolysiloxans zur Vernetzung der Formulierung stattfindet,
wobei der Katalysator in einer Menge von 0,01 bis 10 Gewichtsprozent, bezogen auf die Formulierung vorliegt und der Metathesekatalysator ein Metallkarbenkomplex ist.

2. Verfahren nach Anspruch 1, **dadurch gekennzeichnet, dass** die für die Metathesereaktion notwendige thermische Energie bei der Trocknung der Formulierung zugeführt wird.

3. Verfahren nach einem der vorangehenden Ansprüche, **dadurch gekennzeichnet, dass** die Formulierung weiterhin ein Silikon-MQ-Harz umfasst, das aus R₃SiO_{1/2}-Einheiten ("M-Einheiten") und SiO_{4/2}-Einheiten ("Q-Einheiten") aufgebaut ist, wobei die Substituenten R der M-Einheiten unabhängig voneinander Alkylgruppen, Alkenylgruppen, und/oder Alkylsilylgruppen; insbesondere Methylgruppen sind.

4. Verfahren nach einem der vorangehenden Ansprüche, **gekennzeichnet durch** die Abwesenheit von Hydrosilanen und Hydrosiloxanen.

5. Verfahren nach einem der vorangehenden Ansprüche, **dadurch gekennzeichnet, dass** der Katalysator in einer Menge von 0,1 bis 5 Gewichtsprozent, insbesondere 0,1 bis 2 Gewichtsprozent, bezogen auf die Formulierung, vorliegt.

6. Trennwirksame Schicht eines Releaseliners, erhältlich nach einem der vorangehenden Ansprüche.

## Claims

1. Process for producing a separative layer of a release liner, based on a formulation comprising at least one alkenyl-substituted organopolysiloxane, **characterized in that**
the formulation is present in solution, a metathesis catalyst based on ruthenium or molybdenum is added to the solution, the solution provided with the catalyst is coated onto a carrier material, and on the carrier material a metathesis reaction of the alkenyl-substituted organopolysiloxane takes place for the crosslinking of the formulation, the catalyst being present in an amount of 0.01 to 10 percent by weight, based on the formulation, and the metathesis catalyst being a metal carbene complex.

2. Process according to Claim 1, **characterized in that** the thermal energy necessary for the metathesis reaction is supplied to the formulation in the course of drying.

3. Process according to either of the preceding claims, **characterized in that** the formulation further comprises a silicone MQ resin, composed of R3SiO1/2 units ("M units") and SiO4/2 units ("Q units"), the substituents R in the M units independently of one another being alkyl groups, alkenyl groups and/or alkylsilyl groups, more particularly methyl groups.

4. Process according to any of the preceding claims, **characterized by** the absence of hydrosilanes and hydrosiloxanes.

5. Process according to any of the preceding claims, **characterized in that** the catalyst is present in an amount of 0.1 to 5 percent by weight, more particularly 0.1 to 2 percent by weight, based on the formulation.

6. Separative layer of a release liner, obtainable according to any of the preceding claims.

## Revendications

1. Procédé pour la production d'une couche à action de séparation d'un matériau antiadhésif, à base d'une composition comportant au moins un organopolysiloxane substitué par alcényle, **caractérisé en ce que**
la composition se trouve en solution, on ajoute à la solution un catalyseur de métathèse à base de ruthénium ou molybdène, on applique sur un matériau de support la solution munie du catalyseur et sur le matériau de support une réaction de métathèse de l'organopolysiloxane substitué par alcényle a lieu pour la réticulation de la composition,
dans lequel le catalyseur est présent en une quantité de 0,01 à 10 pour cent en poids, par rapport à la composition, et le catalyseur de métathèse est un complexe métal-carbène.

2. Procédé selon la revendication 1, **caractérisé en ce que** l'énergie thermique requise pour la réaction de métathèse est apportée lors du séchage de la composition.

3. Procédé selon l'une quelconque des revendications précédentes, **caractérisé en ce que** la composition comprend en outre une résine silicone-MQ qui est constituée de motifs R₃SiO_{1/2} (« motifs M » et de motifs SiO_{4/2} (« motifs Q »), les substituants R des motifs M étant, indépendamment les uns des autres, des groupes alkyle, des groupes alcényle, et/ou des groupes alkylsilyle ; en particulier des groupes méthyle.

4. Procédé selon l'une quelconque des revendications précédentes, **caractérisé par** l'absence d'hydrosilanes et d'hydrosiloxanes.

5. Procédé selon l'une quelconque des revendications précédentes, **caractérisé en ce que** le catalyseur est présent en une quantité de 0,1 à 5 pour cent en poids, en particulier de 0,1 à 2 pour cent en poids, par rapport à la formulation.

6. Couche à action de séparation d'un matériau antiadhésif, pouvant être obtenue selon l'une quelconque des revendications précédentes.
